# FASCICULE DE BREVET EUROPEEN

(11) **EP 3 488 924 B1**
(45) Date de publication et mention de la délivrance du brevet: **29.04.2020**
(21) Numéro de dépôt: 18208623.1
(22) Date de dépôt: 27.11.2018
(51) Int. Cl.: B01J 19/24, B01J 4/00

(54) **RÉACTEUR ÉCHANGEUR COMPORTANT UN SYSTÈME DE DISTRIBUTION ÉTAGÉE DE RÉACTIFS**
REAKTOR-WÄRMETAUSCHER, DER EIN ABGESTUFTES VERTEILUNGSSYSTEM VON REAGENZIEN UMFASST
EXCHANGER REACTOR HAVING A STEPPED REAGENT DISTRIBUTION SYSTEM

(30) Priorité: 28.11.2017 FR 1761266
(43) Date de publication de la demande: 29.05.2019
(73) Titulaire: Commissariat à l'énergie atomique et aux énergies alternatives, 75015 Paris (FR)
(72) Inventeur: MORO-LE GALL, Isabelle, 38600 FONTAINE (FR); BENGAOUER, Alain, 38920 CROLLES (FR)
(74) Mandataire: Brevalex

(56) Documents cités:
- EP-A2- 1 224 967
- US-A1- 2007 053 809
- US-B1- 7 090 807
- US-B2- 7 896 935

## Description

### DOMAINE TECHNIQUE

La présente invention se rapporte au domaine général des réacteurs échangeurs destinés à la mise en œuvre de réactions catalytiques endothermiques ou exothermiques.

L'invention trouve de nombreuses applications dans tous types de procédés mettant en œuvre des réactions catalytiques endothermiques ou exothermiques, et notamment fortement endothermiques ou exothermiques, particulièrement du type solide-gaz. De tels procédés peuvent par exemple utiliser un catalyseur solide, notamment sous forme de poudre.

Ces procédés peuvent notamment comprendre des procédés de synthèse de carburants et de combustibles, par exemple des combustibles liquides, tels que le méthanol (MeOH), ou gazeux, tels que le méthane ou substitut de gaz naturel (SNG pour « Synthetic Natural Gas » en anglais) ou le diméthyléther (DME), obtenus à partir d'hydrogène et d'oxydes de carbone ou à partir de gaz de synthèse comprenant un mélange d'hydrogène et d'oxydes de carbone.

L'invention peut ainsi être tout particulièrement appliquée à toutes les situations où la maîtrise de la température est un point crucial, notamment à des réactions très endothermiques ou très exothermiques, catalytiques ou non catalytiques, telles que celle de méthanation du monoxyde ou du dioxyde de carbone en présence d'hydrogène ou encore des réactions du type de celle de Fischer-Tropsch, de celle de reformage humide ou à sec du méthane ou d'autres hydrocarbures, ou encore des réactions d'oxydation. En effet, le problème de la gestion thermique de ces réactions, notamment celles fortement exothermiques de méthanation du monoxyde ou du dioxyde de carbone en présence d'hydrogène, est crucial car l'évolution de la température dans le réacteur échangeur conditionne le taux de conversion et la sélectivité vers le méthane de la réaction, ainsi que la stabilité dans le temps des performances du catalyseur. De plus, ces réactions sont thermodynamiquement favorisées par des pressions élevées.

Préférentiellement, l'invention trouve son application dans la synthèse du méthane selon un procédé de conversion d'électricité en gaz (ou encore de type « Power-to-Gas » en anglais), c'est-à-dire dans lequel l'hydrogène provient de la dissociation de l'eau par électrolyse, tel qu'enseigné dans la publication « Materials Science and Engineering », A179/A180, 1994, K. Hashimoto. La puissance électrique est alors fournie par des énergies renouvelables, par exemple de type éolien ou solaire, par nature intermittentes, ce qui induit un fonctionnement intermittent du réacteur de conversion qui doit fournir des temps de démarrage et de suivi de charge aussi courts que possible. Dans ce contexte d'application « Power-to-Gas », la taille des unités est généralement assez faible, typiquement de l'ordre de 100 à 5000 kW.

L'invention propose ainsi un réacteur échangeur comprenant un système de distribution étagée de réactifs, ainsi qu'un procédé de fabrication d'un tel réacteur échangeur.

### ÉTAT DE LA TECHNIQUE ANTÉRIEURE

On connaît déjà de nombreuses architectures de réacteurs échangeurs catalytiques utilisés dans l'industrie pour assurer le contrôle et le pilotage thermique de réactions chimiques endothermiques ou exothermiques. Les principaux types de réacteurs échangeurs connus pour les réactions exothermiques sont décrits ci-après.

Tout d'abord, la technologie la plus simple de réacteurs échangeurs catalytiques est la technologie de réacteurs dits « à lit fixe ». Dans ce cas, le réacteur échangeur se présente sous la forme d'un cylindre, à l'intérieur duquel le catalyseur est placé. Le catalyseur peut être présent sous la forme de granulés, par exemple du type extrudats, sphères ou anneaux de Raschig, entre autres. L'apport ou l'évacuation des calories sont généralement opérés par un fluide caloporteur qui circule dans un serpentin situé sur la paroi externe du réacteur ou qui est directement introduit à l'intérieur du réacteur.

La mise en œuvre de réactions exothermiques au sein de ce type de réacteur échangeur pose de nombreuses difficultés. En effet, la mauvaise dissipation de la chaleur, due principalement à la faible conductivité thermique de l'ensemble formé par le gaz et le catalyseur, entraîne la formation de points chauds au sein du réacteur. Or, la présence de ces points chauds localisés entraîne des vitesses de réaction plus importantes et peut être à l'origine d'un emballement thermique du réacteur. Aussi, ces températures élevées peuvent nuire aux performances du réacteur échangeur, entraînant notamment une baisse de sélectivité ou de conversion, causer la désactivation du catalyseur, et ainsi diminuer grandement sa durée de vie et poser des problèmes de sécurité.

Dans le cas de réactions endothermiques, la formation de points froids est moins problématique car elle n'entraîne pas d'emballement thermique du réacteur. Cependant, ces points froids entraînent toujours une baisse importante des performances du réacteur échangeur.

Par ailleurs, ce type de réacteur échangeur à lit fixe présente aussi l'inconvénient d'engendrer une perte de charge élevée à travers le lit catalytique.

L'utilisation de réacteurs échangeurs à lits fixes multitubulaires permet d'augmenter l'efficacité de la gestion thermique de ces réacteurs. De tels réacteurs sont constitués de plusieurs tubes, de quelques centimètres de diamètre, remplis de catalyseur et placés dans une enceinte (ou calandre) où circule le fluide caloporteur. L'utilisation de tubes plus étroits peut cependant conduire à des phénomènes de court-circuit hydraulique (ou « by-pass » en anglais) aux parois, qui participent à la formation de points chauds et réduisent le temps de contact des réactifs avec le catalyseur, entraînant ainsi une diminution des performances du réacteur échangeur. De plus, la diminution de la taille des grains de catalyseur pouvant accompagner la réduction du diamètre des tubes, elle entraîne également une augmentation de la perte de charge. En outre, la gestion thermique de ce type de réacteur échangeur demeure parfois toujours insuffisante.

Par ailleurs, les solutions mises en place pour contrôler les réactions fortement exothermiques sont souvent complexes et coûteuses. Il peut s'agir par exemple de la dilution du catalyseur par des particules inertes, du recyclage de gaz, de la distribution des réactifs le long des réacteurs ou de manière étagée entre plusieurs réacteurs, ou encore de la dilution des réactifs par un gaz inerte. Dans tous les cas, ces solutions ont pour but de diminuer les vitesses de réaction et l'efficacité catalytique du réacteur échangeur afin de pouvoir contrôler l'exothermie de la réaction.

Aussi, l'architecture du type « à lit fixe » des réacteurs échangeurs présente l'avantage de la simplicité de fabrication mais rend difficile le contrôle thermique et nécessite l'utilisation de catalyseurs stables à haute température.

Une autre technologie de réacteurs échangeurs concerne les réacteurs échangeurs structurés. Inspirés des échangeurs thermiques à plaques, ces réacteurs échangeurs dans lesquels le fluide caloporteur circule dans des canaux caloporteurs insérés entre deux nappes de canaux réactifs pour leur refroidissement, où se trouve le catalyseur et où a lieu la réaction chimique, se prêtent mieux au contrôle de la température des procédés. En effet, la structuration et surtout la réduction de la section de passage du fluide caloporteur par rapport à une simple calandre permet d'intensifier les échanges thermiques entre le fluide caloporteur et le réacteur afin d'évacuer ou d'apporter des calories avec une meilleure efficacité. Pour de tels réacteurs échangeurs, les canaux réactifs, comme les canaux caloporteurs, peuvent être constitués d'un canal gravé dans une plaque ou encore constitués par l'espace laissé entre deux plaques. Selon la technologie choisie pour le refroidissement, ces réacteurs peuvent être isothermes ou anisothermes.

Par ailleurs, il existe également la technologie des réacteurs échangeurs à lits fluidisés. De tels réacteurs ont été développés pour répondre au problème de transfert thermique dans les lits fixes. Ces réacteurs présentent la particularité de mettre en mouvement les grains de catalyseur, d'une taille de l'ordre de la centaine de micromètres, ce qui permet un mélange qui améliore les transferts. Les réacteurs échangeurs à lits fluidisés offrent l'avantage d'une bonne homogénéité thermique dans les réacteurs, ce qui évite les points chauds. De plus, cette technologie présente de nombreux autres inconvénients, et notamment la formation de particules fines entraînées en dehors du réacteur, des difficultés d'extrapolation en taille ou encore des performances moindres en raison de rétro-mélanges dus au mouvement du catalyseur.

La combinaison de réacteurs échangeurs du même type ou de types différents au sein d'une même unité peut également être envisagée afin d'améliorer la conversion, la flexibilité ou la valorisation de la chaleur récupérée.

Ainsi, par exemple, le brevet US 4,298,694 B1 propose de combiner un réacteur échangeur adiabatique et un réacteur échangeur isotherme dont chacun traite une partie du flux d'entrée de gaz afin de récupérer la chaleur de réaction sous la forme de vapeur surchauffée, laquelle est obtenue par un échangeur connecté en sortie de l'étage adiabatique, tout en produisant un gaz à forte teneur en méthane grâce à la faible température obtenue en sortie du réacteur échangeur isotherme.

Par ailleurs, il est connu de l'homme du métier que la mise en place en série de plusieurs réacteurs offre une souplesse supplémentaire. Par exemple, l'injection des réactifs peut être étagée entre plusieurs réacteurs, ce qui limite le dégagement de puissance de chacun et permet un meilleur contrôle thermique.

L'injection étagée de réactifs dans un seul réacteur est aussi une solution connue dans le cas de réacteurs tubulaires. Cependant, cette solution nécessite la mise en place d'un tube d'injection dans chacun des tubes du réacteur tubulaire, comme enseigné dans le brevet américain US 8,961,909 B2.

Les réacteurs échangeurs à plaques permettent de lever les limitations inhérentes aux réacteurs « à lit fixe » adiabatiques et aux réacteurs « structurés » à tube-calandre. Ils utilisent une superposition de canaux réactifs et de canaux de refroidissement dont les dimensions réduites permettent d'augmenter drastiquement les transferts de masse et de chaleur au sein du réacteur. La compacité et l'efficacité en termes de conversion et de sélectivité peuvent ainsi être améliorées et le passage à l'échelle peut se faire en combinant l'augmentation du nombre de canaux dans un réacteur et la mise en place de plusieurs réacteurs en parallèle tout en conservant les dimensions caractéristiques des canaux.

Parmi les techniques connues de l'homme du métier pour l'assemblage de plaques préalablement usinées, on peut par exemple citer : l'assemblage par brasage de plaques usinées; l'assemblage par soudage par fusion avec ou sans apport de matière (laser, faisceau d'électrons (FE), TIG, ...) ; l'assemblage par soudage par diffusion à l'état solide, entre autres.

L'assemblage par soudage par diffusion à l'état solide est particulièrement approprié car il permet d'assurer l'assemblage de l'ensemble des isthmes inter-canaux tout en préservant la continuité métallurgique. Ces deux conditions sont essentielles pour garantir la tenue mécanique du réacteur en pression (de 5 à 100 bars), en température (de 200°C à 600°C), en présence de cyclage thermique et de gaz ou liquides corrosifs. La technique d'assemblage par soudage diffusion peut aussi être mise en œuvre par Compression Isostatique à Chaud (CIC). Cette technique est connue de l'homme du métier, et notamment décrite dans les demandes de brevet français FR 2 879 489 A1, FR 2 936 179 A1, FR 2 949 699 A1, FR 2 950 551 A1, FR 2 955 039 A1, FR 2 989 158 A1 ou encore FR 3 005 499 A1.

US 2007/053809 divulgue un réacteur échangeur à plaques, comportant un système de distribution étagée de réactifs comprenant une rainure de communication fluidique permettant la mise en communication fluidique des deux canaux réactifs adjacents et une rainure de communication fluidique et ladite au moins une portion d'espacement étant superposées entre elles.

US 7 896 935 montre un réacteur échangeur à plaques avec une pluralité de rainures de communication fluidique (ref.151) et indique qu'elles se trouvent à proximité d'un port d'entré.

Si la conception et la fabrication de réacteurs échangeurs à plaques et leur application à des réactions catalytiques fortement exothermiques sont connues, l'injection étagée des réactifs est un point rendu délicat par le grand nombre de canaux et l'impossibilité d'accéder aux canaux situés au cœur du réacteur pour y injecter les réactifs. Il existe ainsi un besoin pour permettre une telle injection étagée des réactifs par le biais d'une solution technique simple, efficace et peu coûteuse.

### EXPOSÉ DE L'INVENTION

L'invention a pour but de remédier au moins partiellement aux besoins mentionnés précédemment et aux inconvénients relatifs aux réalisations de l'art antérieur.

L'invention vise notamment à permettre une injection étagée de réactifs pour limiter la montée en température du catalyseur afin de limiter son vieillissement et de conserver ainsi dans le temps un meilleur rendement en conversion.

L'invention a ainsi pour objet, selon l'un de ses aspects, un réacteur échangeur à plaques, destiné à la mise en œuvre de réactions catalytiques endothermiques ou exothermiques, comportant :
- un corps de réacteur, formé par l'empilement d'une pluralité de plaques,
- un circuit réactif comprenant au moins deux canaux réactifs comprenant un catalyseur,
- un circuit de fluide caloporteur pour refroidir les canaux réactifs, comprenant une pluralité de canaux de refroidissement,
caractérisé en ce qu'il comporte en outre un système de distribution étagée de réactifs comprenant :
- au moins une rainure de communication fluidique, formée sur un isthme séparant deux canaux réactifs adjacents, permettant la mise en communication fluidique des deux canaux réactifs adjacents,
- au moins une portion d'espacement séparant longitudinalement au moins un premier groupe de canaux de refroidissement et un deuxième groupe de canaux de refroidissement, ladite au moins une rainure de communication fluidique et ladite au moins une portion d'espacement étant superposées entre elles,
- au moins un conduit de distribution de réactifs, formé depuis la surface extérieure du corps de réacteur jusqu'à au moins ladite au moins une rainure de communication fluidique, au travers de ladite au moins une portion d'espacement, et s'étendant sensiblement perpendiculairement aux canaux réactifs et aux canaux de refroidissement, ledit au moins un conduit de distribution de réactifs débouchant sur la surface extérieure du corps de réacteur pour l'alimentation au moins partielle en réactifs du réacteur échangeur et sur au moins ladite au moins une rainure de communication fluidique pour la distribution au moins partielle en réactifs.

Le réacteur échangeur comporte au moins un premier point d'injection de réactifs formé au niveau de l'entrée des canaux réactifs et au moins un deuxième point d'injection de réactifs, notamment au moins un deuxième et un troisième points d'injection, formé au niveau dudit au moins un conduit de distribution de réactifs.

Dans toute la description, les termes « longitudinal » et « transversal » sont respectivement à comprendre par rapport aux directions d'étendue des canaux réactifs et des canaux de refroidissement. Plus précisément, la direction d'étendue des canaux réactifs est ici appelée direction longitudinale, et la direction d'étendue des canaux de refroidissement est ici appelée direction transversale.

Ainsi, une dimension longitudinale est à considérer selon la direction d'étendue des canaux réactifs et une dimension transversale est à considérer selon la direction d'étendue des canaux de refroidissement. Plus précisément encore, la plus grande dimension longitudinale d'un élément est sa plus grande dimension selon un axe parallèle aux axes d'étendue des canaux réactifs. De même, la plus grande dimension transversale de cet élément est sa plus grande dimension selon un axe parallèle aux axes d'étendue des canaux de refroidissement.

De façon avantageuse, tous les canaux réactifs s'étendent selon une même direction, appelée direction longitudinale, et tous les canaux de refroidissement s'étendent selon une même direction, appelée direction transversale. De plus, avantageusement encore, tous les canaux réactifs s'étendent sensiblement perpendiculairement par rapport aux canaux de refroidissement. De cette façon, les directions longitudinale et transversale sont sensiblement perpendiculaires entre elles.

La longueur d'un élément correspond à sa plus grande dimension longitudinale et la largeur de cet élément correspond à sa plus grande dimension transversale.

Le réacteur échangeur selon l'invention peut en outre comporter l'une ou plusieurs des caractéristiques suivantes prises isolément ou suivant toutes combinaisons techniques possibles.

Les canaux réactifs peuvent comporter un catalyseur, notamment un unique catalyseur, préférentiellement sous forme de poudre. Sa granulométrie peut avoir été préalablement sélectionnée. Avantageusement, le catalyseur est présent de façon continue tout le long des canaux réactifs. Ce catalyseur peut par exemple comporter du nickel et être utilisé dans une gamme de température autour de 450°C.

De façon avantageuse, les plaques constitutives du réacteur échangeur présentent les mêmes dimensions en termes de largeur et de longueur. Toutefois, elles peuvent présenter des épaisseurs différentes.

La plus grande dimension longitudinale de ladite au moins une portion d'espacement peut avantageusement être supérieure ou égale à la plus grande dimension longitudinale de ladite au moins une rainure de communication fluidique.

Ladite au moins une portion d'espacement peut s'étendre d'un bord à l'autre du réacteur échangeur.

Le réacteur échangeur peut en outre comporter un dispositif d'alimentation en réactifs dudit au moins un conduit de distribution de réactifs, notamment sous la forme d'une clarinette.

Par ailleurs, le réacteur échangeur peut, selon un exemple de réalisation de l'invention, comporter au moins :
- une première rangée d'au moins deux canaux réactifs et une deuxième rangée d'au moins deux canaux réactifs, superposées entre elles de sorte à former au moins deux colonnes d'au moins deux canaux réactifs,
- une première rainure de communication fluidique et une deuxième rainure de communication fluidique, distantes l'une de l'autre, formées sur un isthme séparant deux canaux réactifs adjacents pour chaque rangée d'au moins deux canaux réactifs,
- un premier groupe, un deuxième groupe et un troisième groupe de canaux de refroidissement, les premier et deuxième groupes étant séparés longitudinalement par une première portion d'espacement et les deuxième et troisième groupes étant séparés longitudinalement par une deuxième portion d'espacement, la première rainure de communication fluidique et la première portion d'espacement étant superposées entre elles, et la deuxième rainure de communication fluidique et la deuxième portion d'espacement étant superposées entre elles,
- un premier conduit de distribution de réactifs, formé depuis la surface extérieure du corps de réacteur jusqu'à la première rainure de communication fluidique de chaque rangée d'au moins deux canaux réactifs, au travers de la première portion d'espacement, et s'étendant sensiblement perpendiculairement aux canaux réactifs et aux canaux de refroidissement, et un deuxième conduit de distribution de réactifs, formé depuis la surface extérieure du corps de réacteur jusqu'à la deuxième rainure de communication fluidique de chaque rangée d'au moins deux canaux réactifs, au travers de la deuxième portion d'espacement, et s'étendant sensiblement perpendiculairement aux canaux réactifs et aux canaux de refroidissement.

De plus, ledit au moins un conduit de distribution de réactifs peut comporter au moins un élément de répartition de débit de réactifs, notamment un élément poreux, par exemple un élément fritté.

Par ailleurs, l'invention a encore pour objet, selon un autre de ses aspects, un procédé de fabrication d'un réacteur échangeur à plaques, selon l'invention, notamment un réacteur échangeur à plaques tel que défini précédemment, destiné à la mise en œuvre de réactions catalytiques endothermiques ou exothermiques et comprenant un corps de réacteur formé par l'empilement d'une pluralité de plaques, caractérisé en ce qu'il comporte les étapes suivantes :
(i) fabrication d'au moins une plaque de canaux réactifs comprenant au moins deux canaux réactifs destinés à recevoir au moins un catalyseur, lesdits au moins deux canaux réactifs étant notamment formés par usinage de ladite au moins une plaque de canaux réactifs, ladite au moins une plaque de canaux réactifs comprenant au moins une rainure de communication fluidique, formée sur un isthme séparant deux canaux réactifs adjacents, permettant la mise en communication fluidique des deux canaux réactifs adjacents, ladite au moins une rainure de communication fluidique étant notamment formée par fraisage de l'isthme,
(ii) fabrication d'au moins une plaque de canaux de refroidissement comprenant une pluralité de canaux de refroidissement destinés à refroidir les canaux réactifs, ladite pluralité de canaux de refroidissement étant notamment formée par usinage de ladite au moins une plaque de refroidissement, ladite pluralité de canaux de refroidissement comprenant au moins un premier groupe de canaux de refroidissement et un deuxième groupe de canaux de refroidissement séparés longitudinalement par au moins une portion d'espacement, ladite au moins une rainure de communication fluidique et ladite au moins une portion d'espacement étant destinées à être superposées entre elles,
(ix) formation, notamment par perçage, d'au moins un conduit de distribution de réactifs depuis la surface extérieure du corps de réacteur jusqu'à au moins ladite au moins une rainure de communication fluidique, au travers de ladite au moins une portion d'espacement, et s'étendant sensiblement perpendiculairement aux canaux réactifs et aux canaux de refroidissement, ledit au moins un conduit de distribution de réactifs débouchant sur la surface extérieure du corps de réacteur pour l'alimentation au moins partielle en réactifs du réacteur échangeur et sur au moins ladite au moins une rainure de communication fluidique pour la distribution au moins partielle en réactifs.

Le procédé peut de plus comporter les étapes suivantes :
(iii) fabrication d'au moins une plaque de fermeture destinée à former au moins en partie la surface extérieure du corps de réacteur.

Le procédé peut également comporter l'étape suivante :
(iv) empilement successif: d'une première plaque de fermeture; d'une première plaque de canaux de refroidissement; d'au moins un ensemble formé de l'empilement d'une plaque de canaux réactifs et d'une plaque de canaux de refroidissement; d'une deuxième plaque de fermeture.

Le procédé peut en outre comporter les étapes successives suivantes :
(v) assemblage préliminaire de l'empilement de plaques dans une enceinte de soudage diffusion et réalisation d'un cycle de soudage diffusion ou par compression isostatique à chaud (CIC) uni-axiale ou par soudage TIG;
(vi) usinage préliminaire de l'empilement de plaques pour exposer à l'atmosphère externe les canaux réactifs et les canaux de refroidissement.

Le procédé peut par ailleurs comporter les étapes successives suivantes :
(vii) assemblage final de l'empilement de plaques par placement de celui-ci dans une enceinte de soudage diffusion et réalisation d'un cycle de soudage diffusion ou d'une compression isostatique à chaud (CIC) uni-axiale ou d'un soudage TIG ;
(viii) usinage final du réacteur échangeur obtenu à l'issue de l'étape (vii) comprenant au moins la mise en œuvre de l'étape (ix).

Le procédé peut enfin comporter l'étape suivante :
(x) mise en place dans ledit au moins un conduit de distribution de réactifs d'au moins un élément de répartition de débit de réactifs, notamment un élément poreux, par exemple un élément fritté.

Le réacteur échangeur et le procédé selon l'invention peuvent comporter l'une quelconque des caractéristiques énoncées dans la description, prises isolément ou selon toutes combinaisons techniquement possibles avec d'autres caractéristiques.

### BRÈVE DESCRIPTION DES DESSINS

L'invention pourra être mieux comprise à la lecture de la description détaillée qui va suivre, d'un exemple de mise en œuvre non limitatif de celle-ci, ainsi qu'à l'examen des figures, schématiques et partielles, du dessin annexé, sur lequel :
- la figure 1 représente, en perspective, un exemple de plaque de canaux réactifs d'un réacteur échangeur à plaques conforme à l'invention,
- la figure 2 est une vue agrandie selon G de la figure 1,
- la figure 3 représente, en perspective, un exemple de plaque de canaux de refroidissement du réacteur échangeur conforme à l'invention,
- la figure 4 représente, en perspective, un exemple de plaque de fermeture du réacteur échangeur conforme à l'invention,
- la figure 5 représente, en perspective, l'empilement des différentes plaques constitutives du réacteur échangeur conforme à l'invention,
- la figure 6 représente, en perspective et en coupe, l'empilement de la figure 5,
- la figure 7 représente, en perspective, le réacteur échangeur conforme à l'invention,
- la figure 8 représente, en perspective et en coupe, le réacteur échangeur de la figure 7,
- les figures 9 et 10 représentent, respectivement en coupe et en vue du dessus, un principe d'alimentation en réactifs des canaux réactifs par le biais des conduits de distribution de réactifs, et
- les figures 11 et 12 illustrent, sous forme graphique, respectivement l'évolution de la température et l'évolution du taux de conversion de dioxyde de carbone en fonction de la position axiale verticale dans le réacteur, pour un cas (A) où le fluide caloporteur est à une température de 270°C et un cas (B) où le fluide caloporteur est à une température de 320°C.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ D'UN MODE DE RÉALISATION PARTICULIER

La présente invention vise à implanter un dispositif d'injection ou de distribution étagée dans un réacteur échangeur à plaques, avantageusement fabriqué par un procédé de soudage diffusion ou encore par Compression Isostatique à Chaud (CIC) ou par soudage TIG.

Un réacteur échangeur à plaques est constitué par la superposition de plaques métalliques, généralement en acier, usinées, par exemple par gravage mécanique, électroérosion ou laser, et ultérieurement assemblées par le biais du procédé de soudage diffusion de sorte à obtenir un réacteur échangeur compact et permettant une bonne maîtrise de la température à l'intérieur de ses canaux.

De façon générale, un tel réacteur échangeur est plus précisément constitué d'une superposition de canaux appelés « canaux réactifs », qui sont ceux dans lesquels les gaz réactifs circulent, dans lesquels le catalyseur est présent et dans lesquels la réaction généralement exothermique se déroule, avec des canaux dits « canaux de refroidissement » ou « canaux caloporteurs », qui sont ceux dans lesquels le fluide caloporteur circule afin de limiter la montée en température dans les canaux réactifs.

La maîtrise fine de la température dans les canaux réactifs est un point crucial pour assurer le bon fonctionnement d'un tel réacteur échangeur à plaques. Dans le cas de réactions exothermiques équilibrées, une température trop faible conduira à une faible cinétique chimique et donc à une faible conversion de réactifs alors qu'une température trop élevée conduira à l'atteinte de la limite thermodynamique de la réaction mise en jeu et à une accélération du vieillissement, qui peut notamment se faire par frittage des catalyseurs.

Pour pouvoir maîtriser la température dans les canaux réactifs, plusieurs solutions peuvent être envisagées : augmenter le nombre de canaux de refroidissement par rapport au nombre de canaux réactifs, optimiser la géométrie des canaux réactifs, diluer le catalyseur, entre autres. Toutefois, à chacune de ces solutions vient s'opposer un inconvénient majeur. En effet, augmenter le nombre de canaux de refroidissement ne peut pas se faire de façon infinie et se réalise au détriment de la compacité. De plus, optimiser la géométrie des canaux réactifs se résume essentiellement à en diminuer la hauteur, ce qui pose d'importants problèmes de remplissage des canaux réactifs en catalyseur. Enfin, diluer le catalyseur revient à dégrader l'efficacité de l'échangeur.

L'exemple de réalisation d'un réacteur échangeur à plaques conforme à l'invention, qui va être décrit par la suite, permet de surmonter l'ensemble de ces inconvénients par l'étagement de la distribution d'un ou plusieurs des gaz réactifs.

Autrement dit, en entrée du réacteur échangeur, on ne fait pas entrer la totalité du débit du ou des gaz considérés mais seulement une fraction. Puis, une deuxième voie d'entrée est ménagée dans le réacteur échangeur pour y amener une nouvelle fraction du débit du ou des gaz, et ainsi de suite. Il est possible de faire autant de points d'entrée que nécessaire pour que la totalité du débit que l'on souhaite injecter dans le réacteur le soit effectivement.

Cet étagement de la distribution du ou des gaz réactifs se fait avantageusement sans dégrader pour autant les caractéristiques du réacteur échangeur, et permet d'alimenter simultanément l'ensemble des canaux réactifs. Le réacteur échangeur proposé par l'invention est également de complexité limitée. Par exemple, il ne requiert pas d'usinage, de soudage ou de modifications de l'échangeur trop complexes à réaliser et/ou trop coûteuses.

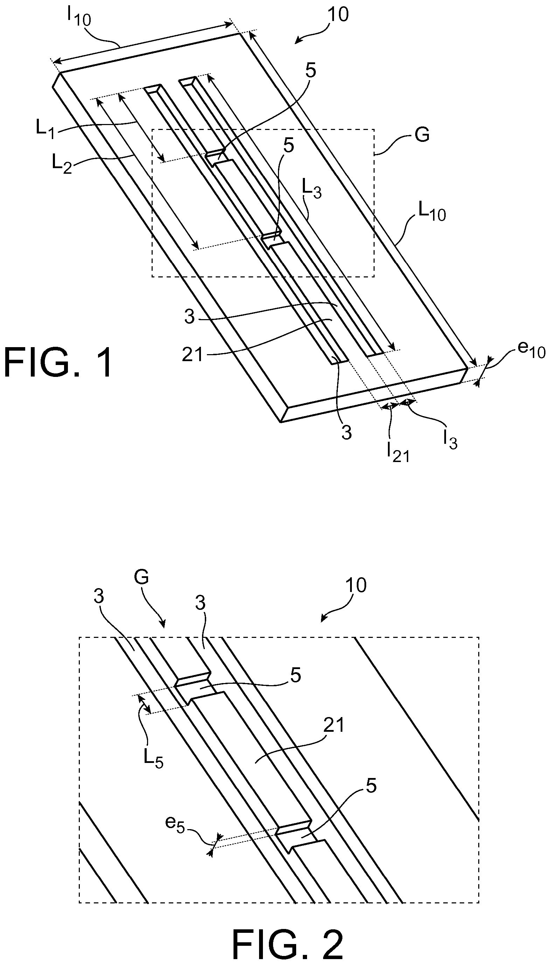

En référence aux figures 1 à 10, on va ainsi décrire un exemple de réalisation privilégié de réacteur échangeur à plaques 1 conforme à l'invention, ainsi que les différentes étapes du procédé de fabrication conforme à l'invention.

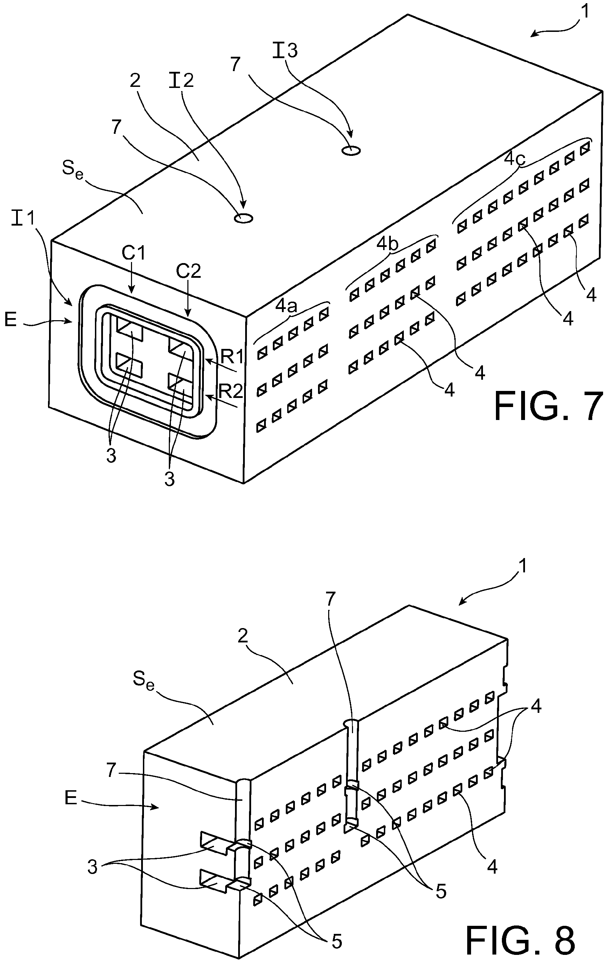

Comme il sera explicité par la suite, la solution de l'invention met avantageusement en œuvre la réalisation de conduits de distribution de réactifs 7, notamment sous la forme de perçages, perpendiculaires à l'empilement des plaques, qui viennent alimenter simultanément les canaux réactifs 3 et évitent les canaux de refroidissement 4. Ces conduits 7 peuvent être réalisés à différentes distances du premier point d'injection I1 des réactifs, à savoir l'entrée E du réacteur échangeur 1, comme visible sur la figure 7, ces distances étant à optimiser en fonction du taux de conversion recherché, de la température maximale souhaitée et du nombre total de points d'injection prévu. Dans la description qui va suivre, on prend l'exemple d'un réacteur échangeur 1 comportant en totalité trois points d'injection I1, I2 et I3 : un point d'injection I1 au niveau de l'entrée principale E du réacteur échangeur 1 et deux autres points d'injection I2 et I3 à différentes distances de l'entrée principale E, comme visible sur la figure 7. Bien entendu, ce choix n'est nullement limitatif.

De plus, il est à noter que, dans la description d'un exemple préféré de l'invention qui va suivre, le nombre, les dimensions, les matériaux, les pressions et les températures indiqués peuvent être modifiés et les choix proposés pour cet exemple ne sont bien entendu aucunement limitatifs.

Le réacteur échangeur 1 est donc tout particulièrement destiné à la mise en œuvre de réactions catalytiques endothermiques ou exothermiques.

Comme on peut le voir sur la figure 7, il comporte un corps de réacteur 2 sous la forme d'un bloc, dans lequel sont situés un circuit réactif comprenant une pluralité de canaux réactifs 3 et un circuit de fluide caloporteur pour refroidir les canaux réactifs 3, comprenant une pluralité de canaux de refroidissement 4. Les canaux de refroidissement 4 sont orientés de façon transverse par rapport aux canaux réactifs 3. Le nombre, les dimensions et les longueurs des canaux réactifs 3 et des canaux de refroidissement 4 dépendent des applications visées pour le réacteur échangeur 1. Ainsi, sur cette figure 7, le réacteur échangeur 1 comporte une première rangée R1 de deux canaux réactifs 3 et une deuxième rangée R2 de deux canaux réactifs 3, superposées entre elles de sorte à former deux colonnes C1 et C2 de chacune deux canaux réactifs 3.

La figure 1 représente, en perspective, un exemple de plaque de canaux réactifs 10 fabriquée pour la réalisation du réacteur échangeur 1 conforme à l'invention.

Plus précisément, deux plaques identiques de canaux réactifs 10 sont réalisées sous la forme de celle représentée à la figure 1.

Les deux plaques métalliques 10 sont par exemple en acier inoxydable et présentent une épaisseur e₁₀ de quelques millimètres, une longueur L₁₀ supérieure à 100 mm et une largeur l₁₀ inférieure à 100 mm.

Les deux plaques 10 sont usinées, par exemple par voie mécanique non traversante, laser ou électrochimique, de sorte à former deux canaux réactifs 3. Chaque canal réactif 3 présente une longueur L₃ supérieure à 100 mm, et une largeur l₃ de quelques millimètres et est centré dans la plaque 10. De plus, l'usinage étant non traversant, l'épaisseur ou hauteur de chaque canal réactif 3 est égale à la moitié de l'épaisseur e₁₀ de la plaque 10 par exemple.

L'isthme 21 entre les deux canaux réactifs 3 présente une largeur l₂₁ de quelques millimètres et correspond à la distance entre les deux canaux réactifs 3.

Conformément à l'invention, des rainures de communication fluidique 5 sont formées sur l'isthme 21 séparant les deux canaux réactifs 3 pour permettre la mise en communication fluidique de ces deux canaux réactifs 3.

Plus précisément, une première rainure 5 est réalisée à une distance L1 d'environ un tiers du début de chaque canal réactif 3 et une deuxième rainure 5 est réalisée à une distance L2 d'environ deux tiers de début de chaque canal réactif 3, comme représenté sur la figure 1.

Ces rainures 5 sont avantageusement obtenues par fraisage, notamment d'une profondeur ou épaisseur es de quelques millimètres, comme représenté sur la figure 2, et avec une longueur L₅ représentant le double de l'épaisseur e₅.

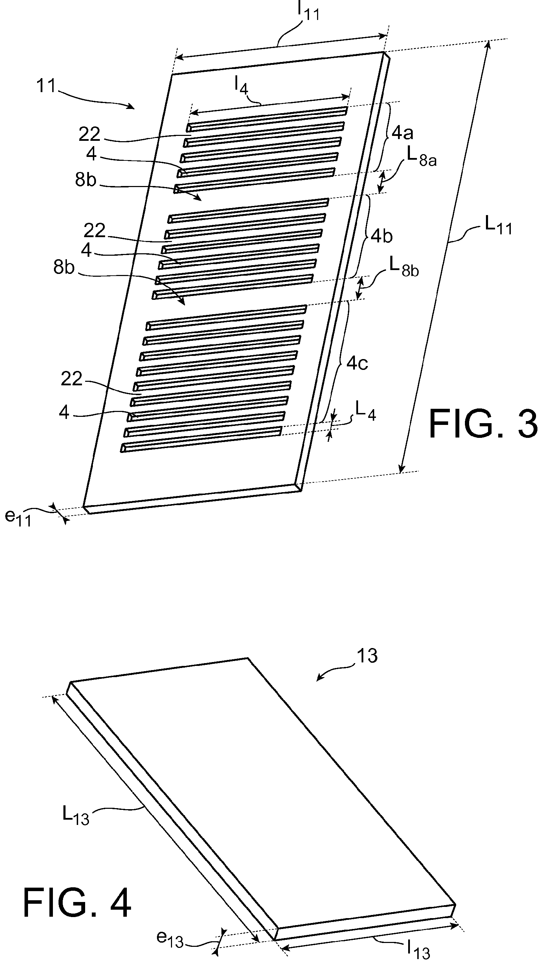

La figure 3 représente, en perspective, un exemple de plaque de canaux de refroidissement 11 fabriquée pour la réalisation du réacteur échangeur 1 conforme à l'invention.

Plus précisément, trois plaques identiques de canaux de refroidissement 11 sont réalisées sous la forme de celle représentée à la figure 3.

Les trois plaques métalliques 11 sont par exemple en acier inoxydable et présentent une épaisseur e₁₁ de quelques millimètres, une longueur L₁₁ supérieure à 100 mm et une largeur l₁₁ inférieure à 100 mm.

Les trois plaques 11 sont usinées, par exemple par voie mécanique non traversante, laser ou électrochimique, de sorte à former une pluralité de canaux de refroidissement 4. Chaque canal de refroidissement 4 présente une longueur L₄ de quelques millimètres et une largeur l₄ inférieure à 100 mm. De plus, l'usinage étant non traversant, l'épaisseur ou hauteur de chaque canal de refroidissement est inférieure à l'épaisseur e₁₁ de la plaque 11.

Quelques dizaines de canaux de refroidissement 4 sont réalisés pour chaque plaque 11. Toutefois, conformément à l'invention, trois groupes 4a, 4b et 4c de canaux de refroidissement 4 sont usinés dans chaque plaque 11. Le premier groupe 4a comporte 5 canaux de refroidissement 4 avec un isthme 22 entre chaque canal 4 de quelques millimètres de longueur. Le deuxième groupe 4b comporte 6 canaux de refroidissement 4 avec toujours un isthme 22 de quelques millimètres de longueur, et le troisième groupe 4c comporte 9 canaux de refroidissement 4 avec toujours un isthme 22 de quelques millimètres de longueur.

Conformément à l'invention, les premier 4a et deuxième 4b groupes de canaux de refroidissement 4 sont séparés l'un de l'autre par une première portion d'espacement 8a, de longueur L₈ₐ égale à quelques millimètres.

De même, les deuxième 4b et troisième 4c groupes de canaux de refroidissement 4 sont séparés l'un de l'autre par une deuxième portion d'espacement 8b, de longueur L_{8b} égale à quelques millimètres.

De façon avantageuse, la réalisation de groupes de canaux de refroidissement 4 permet par la suite de disposer de la place nécessaire pour réaliser les conduits de distribution de réactifs 7, notamment sous forme de perçages, qui permettent alors d'étager la distribution de gaz réactifs et peut également servir à la mise en place de zones de retournements dans les boîtes de distribution du fluide caloporteur.

Des plaques dites « plaques de fermeture » 13 sont également réalisées et destinées à former au moins en partie la surface extérieure Se du réacteur échangeur 1. La figure 4 représente, en perspective, un exemple d'une telle plaque de fermeture 13.

Deux plaques de fermeture 13 sont réalisées. Ces plaques de fermeture 13 sont préférentiellement en acier inoxydable avec une épaisseur e₁₃ de quelques millimètres. Comme pour les plaques 10 et 11 précédentes, les plaques 13 présentent une longueur L₁₃ supérieure à 100 mm et une largeur l₁₃ inférieure à 100 mm.

Après fabrication de chacune des plaques précédemment décrites, un nettoyage poussé est réalisé de chaque plaque 10, 11, 13, la qualité de l'assemblage à venir par soudage diffusion ou CIC en étant partiellement dépendante.

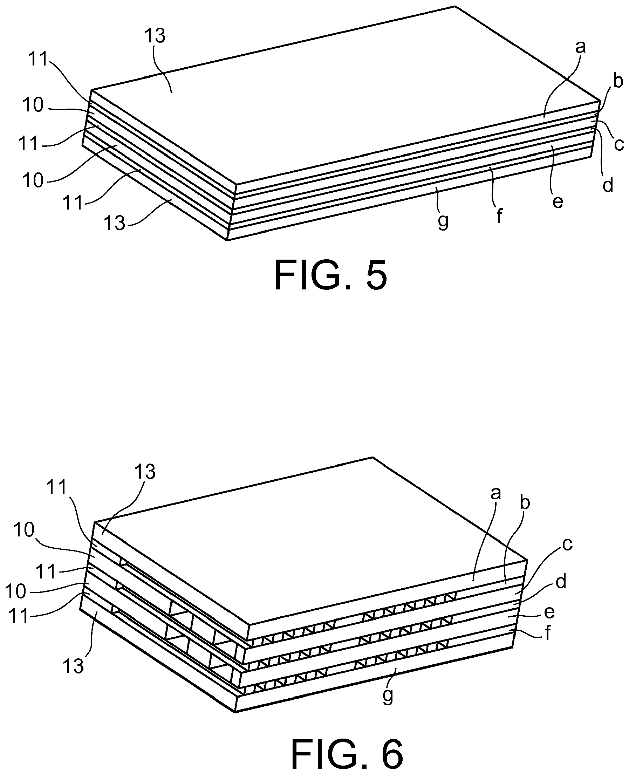

Alors, comme l'illustrent les figures 5 et 6, respectivement en perspective et en perspective et en coupe, un empilement d'une pluralité de plaques est réalisé pour former le réacteur échangeur 1.

Cet empilement est fait de la façon suivante : une plaque de fermeture 13 (référence a sur les figures 5 et 6) ; une plaque de canaux de refroidissement 11 (référence b sur les figures 5 et 6) ; une plaque de canaux réactifs 10 (référence c sur les figures 5 et 6) ; une plaque de canaux de refroidissement 11 (référence d sur les figures 5 et 6) ; une plaque de canaux réactifs 10 (référence e sur les figures 5 et 6) ; une plaque de canaux de refroidissement 11 (référence f sur les figures 5 et 6) ; une plaque de fermeture 13 (référence g sur les figures 5 et 6).

Lors de cet empilement, un soin tout particulier doit être apporté lors de la superposition des plaques de canaux de refroidissement 11 et des plaques de canaux réactifs 10, celles-ci n'étant en effet pas symétrique dans leur longueur. De plus, il est nécessaire d'avoir toutes les plaques de canaux réactifs 10 orientées de la même façon et toutes les plaques de canaux de refroidissement 11 orientées de la même façon, et enfin que les plaques de canaux réactifs 10 et les plaques de canaux de refroidissement 11 soient orientées entre elles de telle sorte que les rainures 5 soient en vis-à-vis des portions d'espacement 8a, 8b réalisées entre les trois groupes 4a, 4b, 4c de canaux de refroidissement 4.

Un assemblage préliminaire de l'empilement de plaques peut être réalisé par le biais du procédé de soudage diffusion.

A l'issue de cet assemblage préliminaire, un usinage préliminaire du réacteur échangeur obtenu est effectué. Précisément, l'objectif de cet usinage préliminaire est d'ouvrir, c'est-à-dire d'exposer à l'atmosphère ambiante, les canaux de refroidissement 4 et les canaux réactifs 3.

Puis, un assemblage final du réacteur échangeur est réalisé toujours par le biais d'un procédé de soudage diffusion. Ainsi, le réacteur est de nouveau placé dans l'enceinte de soudage diffusion. Un cycle à haute pression et haute température est alors réalisé, typiquement aux alentours de 1000°C et 1000 bars durant quelques heures. Celui-ci permet de parfaire le soudage tout en évitant de déformer les canaux compte-tenu du fait qu'ils sont ouverts.

Enfin, un usinage final du réacteur échangeur est réalisé. Durant cette phase d'usinage final, tous les divers usinages permettant par la suite le bon fonctionnement du réacteur échangeur sont réalisés.

Conformément à l'invention, cette étape d'usinage comporte surtout la formation, notamment par perçage, des conduits de distribution de réactifs 7 depuis la surface extérieure Se du corps de réacteur 2 jusqu'aux rainures de communication fluidique 5, au travers des portions d'espacement 8a, 8b, comme représenté respectivement en perspective et en perspective et en coupe sur les figures 7 et 8.

Autrement dit, cette étape permet la réalisation d'un système d'injection ou de distribution étagée des réactifs, permettant d'alimenter en même temps autant de canaux réactifs 3 que souhaités.

Comme expliqué auparavant, les rainures 5 réalisées dans les plaques de canaux réactifs 10 et les portions d'espacement 8a, 8b réalisées dans les plaques de canaux de refroidissement 11 ont été effectuées dans le but de préparer la mise en place de ce système de distribution formé par la création des conduits de distribution 7. La distribution de réactifs par le biais de ces conduits de distribution 7 se fait directement au contact du catalyseur présent en continu dans les canaux réactifs 3.

Dans le cas de l'exemple considéré ici, sans que cela soit limitatif, la distribution des réactifs est donc étagée en trois parties. Une première partie de la distribution s'effectue au niveau de l'entrée E des canaux réactifs 3, comme indiqué sur les figures 7 et 8, la deuxième partie de la distribution ayant lieu à environ un tiers de cette entrée E et la troisième partie de la distribution ayant lieu à environ deux tiers de cette entrée E.

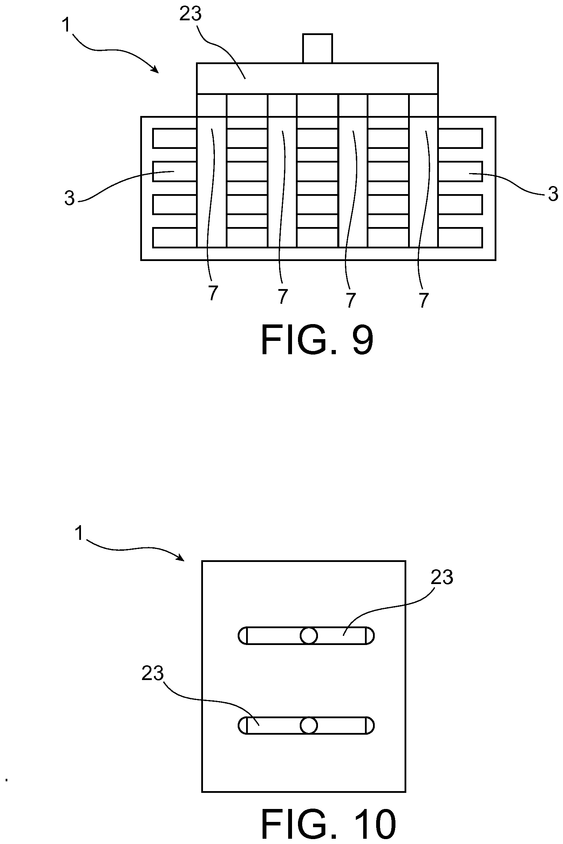

Ainsi, pour un nombre entier N de colonnes de canaux réactifs 3, et considérant une seule distance d'injection par rapport au point d'entrée E, l'alimentation des canaux réactifs 3 peut se faire en réalisant N/2 perçages, ou 1 + N/2 si N est un nombre impair, comme c'est le cas pour la figure 8 où un perçage est réalisé pour deux colonnes de canaux réactifs 3. En variante, l'alimentation des canaux réactifs 3 peut également se faire en réalisant N perçages pour N colonnes de canaux réactifs 3, comme c'est le cas pour la figure 9 qui montre autant de perçages que de colonnes de canaux réactifs 3.

Par ailleurs, de façon préférentielle, des éléments poreux, notamment des éléments frittés, sont insérés à l'intérieur des conduits de distribution 7. Ces éléments ont une porosité qui dépend notamment de la perte de charge souhaitée ainsi que de la taille des particules du catalyseur. Autrement dit, ces éléments permettent d'éviter la fuite de particules.

Par la suite, sur la surface externe Se du réacteur échangeur 1 sont soudés des tubes ou des boîtes de distribution mécano-soudées, ou bien encore fabriquées par tout autre moyen, afin d'emmener les gaz réactifs à distribuer.

Les figures 9 et 10 représentent par ailleurs, respectivement en coupe et en vue du dessus, un principe d'alimentation en réactifs des canaux réactifs 3 par le biais des conduits de distribution 7.

De façon avantageuse, chaque conduit 7 alimente directement tous les canaux réactifs 3. Ainsi, si par exemple un réacteur échangeur 1 comporte 4 nappes de 5 canaux réactifs 3 parallèles et qu'il est prévu trois points d'injection au total des réactifs, à savoir un au niveau de l'entrée principale E des canaux réactifs 3 et deux à différentes distances de l'injection principale, il suffira d'effectuer entre 6 et 8 perçages pour alimenter les 20 canaux réactifs 3.

L'alimentation des conduits de distribution 7 peut par exemple se faire par le biais de clarinettes 23, comme représenté sur les figures 9 et 10 pour cet exemple dans lequel deux clarinettes 23 sont nécessaires, ou bien encore par le biais de boîtes de distribution ou tout autre dispositif.

Pour illustrer les avantages procurés par la présente invention, un ensemble de simulations a été réalisé. Une réaction de méthanation est simulée numériquement par la résolution du modèle hétérogène, tel que décrit dans l'ouvrage « Le stockage d'énergie, Conversion d'énergie en gaz combustible », Bouallou Chakib, Chapitre 6, avril 2015, Edition Presses des Mines.

Un mélange H₂-CH₄ stœchiométrique pour la réaction de méthanation est injecté, soit totalement en entrée du réacteur, soit pour partie en entrée et pour partie en deux points d'injection distants respectivement de 35 mm et de 112 mm de l'entrée.

Le mélange entre à une température fixée entre 270°C et 320°C et les parois du réacteur échangeur conforme à l'invention sont maintenues à la même température, fixée entre 270°C et 320°C. La pression en sortie du réacteur échangeur est maintenue à 2,5 bars (absolu). Un catalyseur constitué de nickel sur alumine est utilisé.

L'évolution des fractions molaires, de la conversion et de la température maximale du gaz et du catalyseur sont étudiées pour les configurations suivantes :
Cas 1 : 100 % du débit injecté en entrée du réacteur E ;
Cas 2 : 25 % du débit injecté en entrée du réacteur E, 25 % injecté au premier point d'injection I2 et 50 % injecté au deuxième point d'injection I3 ;
Cas 3 : 20 % du débit injecté en entrée du réacteur E, 40 % injecté au premier point d'injection I2 et 40 % injecté au deuxième point d'injection I3 ; et
Cas 4 : 10 % du débit injecté en entrée du réacteur E, 40 % injecté au premier point d'injection I2 et 50 % injecté au deuxième point d'injection I3.

Les principaux résultats sont alors indiqués dans le tableau ci-dessous, qui montrent les températures maximales (Tₘₐₓ) et les taux de conversion du CO₂ (X_{CO2}) obtenus par simulation pour les quatre cas 1, 2, 3 et 4 pour des températures variant de 270°C à 320°C :

| | 270°C | | 280°C | | 300°C | | 320°C | |
|---|---|---|---|---|---|---|---|---|
| | Tₘₐₓ | X_{CO2} | Tₘₐₓ | X_{CO2} | Tₘₐₓ | X_{CO2} | Tₘₐₓ | X_{CO2} |
| Cas 1 | 490°C | 78 % | 517°C | 82 % | - | - | - | - |
| Cas 2 | 369°C | 46 % | 390°C | 51 % | 419°C | 71 % | - | - |
| Cas 3 | 338°C | 44 % | 366°C | 50 % | 397°C | 69 % | 422°C | 82 % |
| Cas 4 | 295°C | 44 % | 319°C | 51 % | 352°C | 62 % | 385°C | 82 % |

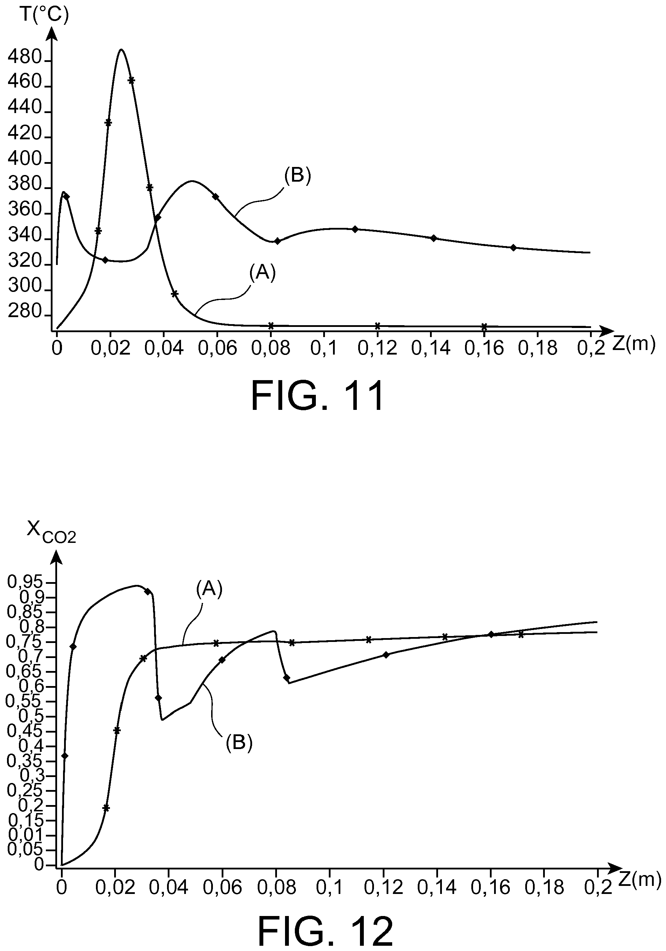

Ces simulations montrent bien le gain apporté par distribution étagée conforme à l'invention. Par exemple, dans le cas 1, la température maximale atteinte est de 490°C pour une conversion de CO₂ de 78 %. Ce haut niveau de température est défavorable à la durée de vie du catalyseur à cause notamment des phénomènes de frittage accélérés à haute température. La distribution de l'alimentation étagée, telle que simulée dans le cas 4, conduit à une température maximale de seulement 385°C, soit inférieure de 100°C à celle simulée dans le cas 1 pour une conversion de 82 % de CO₂ de, soit 4 % de plus que dans le cas 1. Pour obtenir ces résultats, la température du fluide caloporteur a été augmentée de 270°C à 320°C, ce qui ne pose pas de problèmes techniques et s'avère même favorable à la récupération de la chaleur dégagée par la réaction qui pourra être valorisée à plus haute température. Les figures 11 et 12 illustrent, sous forme graphique, respectivement l'évolution de la température (T) et l'évolution du taux de conversion de dioxyde de carbone (X_{CO2}) en fonction de la position axiale verticale (z) dans le réacteur, pour un cas (A) où le fluide caloporteur est à une température de 270°C (cas 1 décrit ci-dessus) et un cas (B) où le fluide caloporteur est à une température de 320°C (cas 4 décrit ci-dessus).

Bien entendu, l'invention n'est pas limitée à l'exemple de réalisation qui vient d'être décrit auparavant. Diverses modifications peuvent y être apportées par l'homme du métier.

En particulier, le matériau utilisé pour la fabrication des plaques 10, 11, 13 constitutives du réacteur échangeur 1 peut être autre que de l'acier inoxydable.

Les dimensions données précédemment peuvent être modifiées, notamment afin de créer des réacteurs échangeurs 1 de plus grande ou plus petite dimension, que ce soit en taille ou en nombre de canaux.

De même, les indications données en pression et en température pour la réalisation des assemblages par soudage diffusion peuvent être soumis à variation, notamment en fonction des matériaux utilisés et de la géométrie des plaques constitutives du réacteur échangeur 1.

De plus, l'introduction d'éléments poreux, notamment frittés, dans les conduits de distribution 7 pour la distribution étagée n'est pas essentielle. Dans l'exemple décrit précédemment, ces éléments ont principalement vocation à empêcher au catalyseur qui va remplir les canaux réactifs 3 de partir dans les conduits 7.

Par ailleurs, les conduits de distribution 7, ici de forme cylindrique de quelques millimètres de diamètre peuvent avoir toute autre dimension et toute autre forme, par exemple conique, de section polygonale, par exemple rectangulaire, carrée, entre autres.

De plus, le nombre de conduits de distribution 7 et leur distance vis-à-vis de l'entrée E des canaux réactifs 3 peuvent être variables en fonction de la taille du réacteur échangeur 1 ou de l'intensité de la réaction souhaitée, entre autres, ces paramètres n'étant aucunement fixes.

En outre, dans l'exemple considéré précédemment, les réactifs sont mélangés avant d'être injectés dans les différents conduits 7 qui permettent la distribution étagée. Toutefois, il est possible de ne pas injecter tous les réactifs de façon étagée en injectant par exemple un ou plusieurs réactifs à l'entrée E des canaux réactifs 3 et un ou plusieurs autres réactifs de façon étagée.

Enfin, afin d'amener les réactifs jusqu'au niveau des conduits de distribution 7, plusieurs solutions peuvent être envisagées, comme par exemple le soudage direct de tubulures au niveau des conduits 7, la mise en place d'une ou plusieurs boîtes de distribution, entre autres.

La répartition des débits de gaz réactifs entre les différentes injections peut être contrôlée soit par la mise en place d'éléments, tels que frittés ou orifices calibrés, dimensionnés pour obtenir le débit voulu dans chaque injection, soit par le contrôle actif des débits par la mise en place de régulateurs de débits sur chaque injection.

## Revendications

1. Réacteur échangeur à plaques (1), destiné à la mise en œuvre de réactions catalytiques endothermiques ou exothermiques, comportant :
- un corps de réacteur (2), formé par l'empilement d'une pluralité de plaques (10, 11, 12, 13),
- un circuit réactif comprenant au moins deux canaux réactifs (3) comprenant un catalyseur,
- un circuit de fluide caloporteur pour refroidir les canaux réactifs (3), comprenant une pluralité de canaux de refroidissement (4),
**caractérisé en ce qu'**il comporte en outre un système de distribution étagée de réactifs comprenant :
- au moins une rainure de communication fluidique (5), formée sur un isthme (6) séparant deux canaux réactifs (3) adjacents, permettant la mise en communication fluidique des deux canaux réactifs (3) adjacents,
- au moins une portion d'espacement (8a, 8b) séparant longitudinalement au moins un premier groupe (4a) de canaux de refroidissement (4) et un deuxième groupe (4b) de canaux de refroidissement (4), ladite au moins une rainure de communication fluidique (5) et ladite au moins une portion d'espacement (8a, 8b) étant superposées entre elles,
- au moins un conduit de distribution de réactifs (7), formé depuis la surface extérieure (Se) du corps de réacteur (2) jusqu'à au moins ladite au moins une rainure de communication fluidique (5), au travers de ladite au moins une portion d'espacement (8a, 8b), et s'étendant sensiblement perpendiculairement aux canaux réactifs (3) et aux canaux de refroidissement (4), ledit au moins un conduit de distribution de réactifs (7) débouchant sur la surface extérieure (Se) du corps de réacteur (2) pour l'alimentation au moins partielle en réactifs du réacteur échangeur (1) et sur au moins ladite au moins une rainure de communication fluidique (5) pour la distribution au moins partielle en réactifs,
et **en ce qu'**il comporte au moins un premier point d'injection (l1) de réactifs formé au niveau de l'entrée (E) des canaux réactifs (3) et au moins un deuxième point d'injection (I2, I3) de réactifs formé au niveau dudit au moins un conduit de distribution de réactifs (7).

2. Réacteur échangeur selon la revendication 1, **caractérisé en ce que** la plus grande dimension longitudinale (L₈ₐ, L_{8b}) de ladite au moins une portion d'espacement (8a, 8b) est supérieure ou égale à la plus grande dimension longitudinale (L₅) de ladite au moins une rainure de communication fluidique (5).

3. Réacteur échangeur selon l'une quelconque des revendications précédentes, **caractérisé en ce que** ladite au moins une portion d'espacement (8a, 8b) s'étend d'un bord à l'autre du réacteur échangeur (1).

4. Réacteur échangeur selon l'une quelconque des revendications précédentes, **caractérisé en ce qu'**il comporte un dispositif d'alimentation en réactifs (23) dudit au moins un conduit de distribution de réactifs (7), notamment sous la forme d'une clarinette (23).

5. Réacteur échangeur selon l'une quelconque des revendications précédentes, **caractérisé en ce qu'**il comporte au moins :
- une première rangée (R1) d'au moins deux canaux réactifs (3) et une deuxième rangée (R2) d'au moins deux canaux réactifs (3), superposées entre elles de sorte à former au moins deux colonnes (C1, C2) d'au moins deux canaux réactifs (3),
- une première rainure de communication fluidique (5) et une deuxième rainure de communication fluidique (5), distantes l'une de l'autre, formées sur un isthme (6) séparant deux canaux réactifs (3) adjacents pour chaque rangée (R1, R2) d'au moins deux canaux réactifs (3),
- un premier groupe (4a), un deuxième groupe (4b) et un troisième groupe (4c) de canaux de refroidissement (4), les premier (4a) et deuxième (4b) groupes étant séparés longitudinalement par une première portion d'espacement (8a) et les deuxième (4b) et troisième (4c) groupes étant séparés longitudinalement par une deuxième portion d'espacement (8b), la première rainure de communication fluidique (5) et la première portion d'espacement (8a) étant superposées entre elles, et la deuxième rainure de communication fluidique (5) et la deuxième portion d'espacement (8b) étant superposées entre elles,
- un premier conduit de distribution de réactifs (7), formé depuis la surface extérieure (Se) du corps de réacteur (2) jusqu'à la première rainure de communication fluidique (5) de chaque rangée (R1, R2) d'au moins deux canaux réactifs (3), au travers de la première portion d'espacement (8a), et s'étendant sensiblement perpendiculairement aux canaux réactifs (3) et aux canaux de refroidissement (4), et un deuxième conduit de distribution de réactifs (7), formé depuis la surface extérieure (Se) du corps de réacteur (2) jusqu'à la deuxième rainure de communication fluidique (5) de chaque rangée (R1, R2) d'au moins deux canaux réactifs (3), au travers de la deuxième portion d'espacement (8b), et s'étendant sensiblement perpendiculairement aux canaux réactifs (3) et aux canaux de refroidissement (4).

6. Réacteur échangeur selon l'une quelconque des revendications précédentes, **caractérisé en ce que** ledit au moins un conduit de distribution de réactifs (7) comporte au moins un élément de répartition de débit de réactifs, notamment un élément poreux, par exemple un élément fritté.

7. Procédé de fabrication d'un réacteur échangeur à plaques (1) selon la revendication 1, destiné à la mise en œuvre de réactions catalytiques endothermiques ou exothermiques et comprenant un corps de réacteur (2) formé par l'empilement d'une pluralité de plaques (10, 11, 12, 13), **caractérisé en ce qu'**il comporte les étapes suivantes :
(i) fabrication d'au moins une plaque de canaux réactifs (10) comprenant au moins deux canaux réactifs (3) destinés à recevoir au moins un catalyseur, ladite au moins une plaque de canaux réactifs (10) comprenant au moins une rainure de communication fluidique (5), formée sur un isthme (6) séparant deux canaux réactifs (3) adjacents, permettant la mise en communication fluidique des deux canaux réactifs (3) adjacents,
(ii) fabrication d'au moins une plaque de canaux de refroidissement (11) comprenant une pluralité de canaux de refroidissement (4) destinés à refroidir les canaux réactifs (3), ladite pluralité de canaux de refroidissement (4) comprenant au moins un premier groupe (4a) de canaux de refroidissement (4) et un deuxième groupe (4b) de canaux de refroidissement (4) séparés longitudinalement par au moins une portion d'espacement (8a, 8b), ladite au moins une rainure de communication fluidique (5) et ladite au moins une portion d'espacement (8a, 8b) étant destinées à être superposées entre elles,
(ix) formation, notamment par perçage, d'au moins un conduit de distribution de réactifs (7) depuis la surface extérieure (Se) du corps de réacteur (2) jusqu'à au moins ladite au moins une rainure de communication fluidique (5), au travers de ladite au moins une portion d'espacement (8a, 8b), et s'étendant sensiblement perpendiculairement aux canaux réactifs (3) et aux canaux de refroidissement (4), ledit au moins un conduit de distribution de réactifs (7) débouchant sur la surface extérieure (Se) du corps de réacteur (2) pour l'alimentation au moins partielle en réactifs du réacteur échangeur (1) et sur au moins ladite au moins une rainure de communication fluidique (5) pour la distribution au moins partielle en réactifs.

8. Procédé selon la revendication 7, **caractérisé en ce qu'**il comporte les étapes suivantes :
(iii) fabrication d'au moins une plaque de fermeture (13) destinée à former au moins en partie la surface extérieure (Se) du corps de réacteur (2).

9. Procédé selon la revendication 8, **caractérisé en ce qu'**il comporte l'étape suivante :
(iv) empilement successif: d'une première plaque de fermeture (13) ; d'une première plaque de canaux de refroidissement (11) ; d'au moins un ensemble formé de l'empilement d'une plaque de canaux réactifs (10) et d'une plaque de canaux de refroidissement (11) ; d'une deuxième plaque de fermeture (13).

10. Procédé selon la revendication 8, **caractérisé en ce qu'**il comporte les étapes successives suivantes :
(v) assemblage préliminaire de l'empilement de plaques (10, 11, 12, 13) dans une enceinte de soudage diffusion et réalisation d'un cycle de soudage diffusion ou par compression isostatique à chaud (CIC) uni-axiale ou par soudage TIG ;
(vi) usinage préliminaire de l'empilement de plaques (10, 11, 12, 13) pour exposer à l'atmosphère externe les canaux réactifs (3) et les canaux de refroidissement (4).

11. Procédé selon la revendication 10, **caractérisé en ce qu'**il comporte les étapes successives suivantes :
(vii) assemblage final de l'empilement de plaques (10, 11, 12, 13) par placement de celui-ci dans une enceinte de soudage diffusion et réalisation d'un cycle de soudage diffusion ou d'une compression isostatique à chaud (CIC) uni-axiale ou d'un soudage TIG ;
(viii) usinage final du réacteur échangeur (1) obtenu à l'issue de l'étape (vii) comprenant au moins la mise en œuvre de l'étape (ix).

12. Procédé selon la revendication 11, **caractérisé en ce qu'**il comporte l'étape suivante :
(x) mise en place dans ledit au moins un conduit de distribution de réactifs (7) d'au moins un élément de répartition de débit de réactifs, notamment un élément poreux, par exemple un élément fritté.

## Patentansprüche

1. Austauschreaktor mit Platten (1) zur Durchführung von katalytischen endothermen oder exothermen Reaktionen, enthaltend:
- einen Reaktorkörper (2), der aus der Stapelung einer Mehrzahl von Platten (10, 11, 12, 13) gebildet ist,
- einen Reaktionskreislauf mit zumindest zwei Reaktionskanälen (3), die einen Katalysator enthalten,
- einen Wärmeträgerkreislauf zur Kühlung der Reaktionskanäle (3), der eine Mehrzahl von Kühlkanälen (4) umfasst,
**dadurch gekennzeichnet, dass**
er ferner ein Abgabesystem zum abgestuften Abgeben von Reaktanten umfasst, das enthält:
- zumindest eine Strömungsverbindungsnut (5), die an einer Verengung (6) ausgebildet ist, die zwei aneinandergrenzende Reaktionskanäle (3) trennt und die Strömungsverbindung der beiden aneinandergrenzenden Reaktionskanäle (3) ermöglicht,
- zumindest einen Abstandshalterabschnitt (8a, 8b), der in Längsrichtung zumindest eine erste Gruppe (4a) von Kühlkanälen (4) und eine zweite Gruppe (4b) von Kühlkanälen (4) trennt, wobei die zumindest eine Strömungsverbindungsnut (5) und der zumindest eine Abstandshalterabschnitt (8a, 8b) übereinander angeordnet sind,
- zumindest eine Reaktantenabgabeleitung (7), die ausgehend von der Außenfläche (Se) des Reaktorkörpers (2) zumindest bis zur zumindest einen Strömungsverbindungsnut (5) durch den zumindest einen Abstandshalterabschnitt (8a, 8b) hindurch ausgebildet ist und sich im Wesentlichen senkrecht zu den Reaktionskanälen (3) und zu den Kühlkanälen (4) erstreckt, wobei die zumindest eine Reaktantenabgabeleitung (7) an der Außenfläche (Se) des Reaktorkörpers (2) für die zumindest teilweise Zufuhr von Reaktanten zum Austauschreaktor (1) und zumindest an der zumindest einen Strömungsverbindungsnut (5) für die zumindest teilweise Abgabe von Reaktanten ausmündet,
und wobei er zumindest eine erste Reaktanteneinspritzstelle (l1), die im Bereich des Einlasses (E) der Reaktionskanäle (3) ausgebildet ist, und zumindest eine zweite Reaktanteneinspritzstelle (l2, l3), die im Bereich der zumindest einen Reaktantenabgabeleitung (7) ausgebildet ist, umfasst.

2. Austauschreaktor nach Anspruch 1,
**dadurch gekennzeichnet, dass**
die größte Längsabmessung (L₈ₐ, L_{8b}) des zumindest einen Abstandhalterabschnitts (8a, 8b) größer oder gleich der größten Längsabmessung (Ls) der zumindest einen Strömungsverbindungsnut (5) ist.

3. Austauschreaktor nach einem der vorangehenden Ansprüche,
**dadurch gekennzeichnet, dass**
der zumindest eine Abstandhalterabschnitt (8a, 8b) sich von einem Rand des Austauschreaktors (1) zum anderen erstreckt.

4. Austauschreaktor nach einem der vorangehenden Ansprüche,
**dadurch gekennzeichnet, dass**
er eine Vorrichtung (23) zum Zuführen von Reaktanten zu der zumindest einen Reaktantenabgabeleitung (7), insbesondere in Klarinettenform (23), enthält.

5. Austauschreaktor nach einem der vorangehenden Ansprüche,
**dadurch gekennzeichnet, dass** er zumindest enthält:
- eine erste Reihe (R1) von zumindest zwei Reaktionskanälen (3) und eine zweite Reihe (R2) von zumindest zwei Reaktionskanälen (3), die so übereinander angeordnet sind, dass sie zumindest zwei Säulen (C1, C2) von zumindest zwei Reaktionskanälen (3) bilden,
- eine erste Strömungsverbindungsnut (5) und eine zweite Strömungsverbindungsnut (5), die voneinander beabstandet sind, an einer Verengung (6) ausgebildet sind, die zwei aneinandergrenzende Reaktionskanäle (3) bei jeder Reihe (R1, R2) von zumindest zwei Reaktionskanälen (3) trennt,
- eine erste Gruppe (4a), eine zweite Gruppe (4b) und eine dritte Gruppe (4c) von Kühlkanälen (4), wobei die erste (4a) und die zweite Gruppe (4b) in Längsrichtung durch einen ersten Abstandshalterabschnitt (8a) und die zweite (4b) und die dritte Gruppe (4c) in Längsrichtung durch einen zweiten Abstandshalterabschnitt (8b) getrennt sind, wobei die erste Strömungsverbindungsnut (5) und der erste Abstandshalterabschnitt (8a) übereinander angeordnet sind und die zweite Strömungsverbindungsnut (5) und der zweite Abstandshalterabschnitt (8b) übereinander angeordnet sind,
- eine erste Reaktantenabgabeleitung (7), die ausgehend von der Außenfläche (Se) des Reaktorkörpers (2) bis zur ersten Strömungsverbindungsnut (5) einer jeden Reihe (R1, R2) von zumindest zwei Reaktionskanälen (3) durch den ersten Abstandshalterabschnitt (8a) hindurch ausgebildet ist und sich im Wesentlichen senkrecht zu den Reaktionskanälen (3) und zu den Kühlkanälen (4) erstreckt, und eine zweite Reaktantenabgabeleitung (7), die ausgehend von der Außenfläche (Se) des Reaktorkörpers (2) bis zur zweiten Strömungsverbindungsnut (5) einer jeden Reihe (R1, R2) von zumindest zwei Reaktionskanälen (3) durch den zweiten Abstandshalterabschnitt (8b) hindurch ausgebildet ist und sich im Wesentlichen senkrecht zu den Reaktionskanälen (3) und zu den Kühlkanälen (4) erstreckt.

6. Austauschreaktor nach einem der vorangehenden Ansprüche,
**dadurch gekennzeichnet, dass**
die zumindest eine Reaktantenabgabeleitung (7) zumindest ein Reaktantenflussverteilungselement, insbesondere ein poröses Element, z.B. ein Sinterelement, enthält.

7. Verfahren zum Herstellen eines Austauschreaktors mit Platten (1) nach Anspruch 1, der zur Durchführung von katalytischen endothermen oder exothermen Reaktionen bestimmt ist und einen Reaktorkörper (2), der aus der Stapelung einer Mehrzahl von Platten (10, 11, 12, 13) gebildet ist, enthält, **dadurch gekennzeichnet, dass** es die nachstehenden Schritte umfasst:
(i) Herstellen von zumindest einer Reaktionskanalplatte (10), die zumindest zwei Reaktionskanäle (3) enthält, die zum Aufnehmen von zumindest einem Katalysator bestimmt sind, wobei die zumindest eine Reaktionskanalplatte (10) zumindest eine Strömungsverbindungsnut (5) enthält, die an einer Verengung (6) ausgebildet ist, die zwei aneinandergrenzende Reaktionskanäle (3) trennt und die Strömungsverbindung der beiden aneinandergrenzenden Reaktionskanäle (3) ermöglicht,
(ii) Herstellen von zumindest einer Kühlkanalplatte (11), die eine Mehrzahl von Kühlkanälen (4) enthält, die dazu bestimmt sind, die Reaktionskanäle (3) zu kühlen, wobei die Mehrzahl von Kühlkanälen (4) zumindest eine erste Gruppe (4a) von Kühlkanälen (4) und eine zweite Gruppe (4b) von Kühlkanälen (4) umfasst, die in Längsrichtung durch zumindest einen Abstandshalterabschnitt (8a, 8b) getrennt sind, wobei die zumindest eine Strömungsverbindungsnut (5) und der zumindest eine Abstandshalterabschnitt (8a, 8b) dazu bestimmt sind, übereinander angeordnet zu werden,
(ix) Ausbilden, insbesondere durch Bohren, von zumindest einer Reaktantenabgabeleitung (7) ausgehend von der Außenfläche (Se) des Reaktorkörpers (2) bis zur zumindest einen Strömungsverbindungsnut (5) durch den zumindest einen Abstandshalterabschnitt (8a, 8b) hindurch, die sich im Wesentlichen senkrecht zu den Reaktionskanälen (3) und zu den Kühlkanälen (4) erstreckt, wobei die zumindest eine Reaktantenabgabeleitung (7) an der Außenfläche (Se) des Reaktorkörpers (2) für die mindestens teilweise Zufuhr von Reaktanten zum Austauschreaktor (1) und zumindest an der zumindest einen Strömungsverbindungsnut (5) für die zumindest teilweise Abgabe von Reaktanten ausmündet.

8. Verfahren nach Anspruch 7,
**dadurch gekennzeichnet, dass** es die nachstehenden Schritte umfasst:
(iii) Herstellen von zumindest einer Abschlussplatte (13), die dazu bestimmt ist, zumindest teilweise die Außenfläche (Se) des Reaktorkörpers (2) zu bilden.

9. Verfahren nach Anspruch 8,
**dadurch gekennzeichnet, dass** es den nachstehenden Schritt umfasst:
(iv) aufeinanderfolgendes Stapeln von einer ersten Abschlussplatte (13); einer ersten Kühlkanalplatte (11); zumindest einer Einheit, die aus der Stapelung einer Reaktionskanalplatte (10) und einer Kühlkanalplatte (11) gebildet ist; und einer zweiten Abschlussplatte (13).

10. Verfahren nach Anspruch 8,
**dadurch gekennzeichnet, dass** es die nachstehenden, aufeinanderfolgenden Schritte umfasst:
(v) Vormontieren der Stapelung von Platten (10, 11, 12, 13) in einer Diffusionsschweißkammer und Durchführen eines Diffusionsschweißzyklus oder eines einachsigen heißisostatischen Pressvorgangs (HIP) oder eines WIG-Schweißzyklus;
(vi) Vorbearbeiten der Stapelung von Platten (10, 11, 12, 13), um die Reaktionskanäle (3) und die Kühlkanäle (4) der äußeren Atmosphäre auszusetzen.

11. Verfahren nach Anspruch 10,
**dadurch gekennzeichnet, dass** es die nachstehenden, aufeinanderfolgenden Schritte umfasst:
(vii) Endmontieren der Stapelung von Platten (10, 11, 12, 13) durch Einlegen derselben in eine Diffusionsschweißkammer und Durchführen eines Diffusionsschweißzyklus oder einachsigen heißisostatischen Pressvorgangs (HIP) oder eines WIG-Schweißzyklus;
(viii) Endbearbeiten des Austauschreaktors (1), der am Ende von Schritt (vii) erhalten wird, wobei es zumindest das Ausführen von Schritt (ix) umfasst.

12. Verfahren nach Anspruch 11,
**dadurch gekennzeichnet, dass** es den nachstehenden Schritt umfasst:
(x) Anordnen von zumindest einem Reaktantenflussverteilungselement, insbesondere von einem porösen Element, beispielsweise von einem Sinterelement, in der zumindest einen Reaktantenabgabeleitung (7).

## Claims

1. A plate heat exchanger reactor (1), for implementing endothermic or exothermic catalytic reactions, including:
- a reactor body (2), formed by stacking a plurality of plates (10, 11, 12, 13),
- a reagent circuit comprising at least two reagent channels (3) comprising a catalyst,
- a coolant circuit to cool the reagent channels (3), comprising a plurality of cooling channels (4),
**characterised in that** it further includes a stepped reagent dispensing system comprising:
- at least one fluid communication groove (5), formed on an isthmus (6) separating two adjacent reagent channels (3), for fluidly communicating both adjacent reagent channels (3),
- at least one spacing portion (8a, 8b) longitudinally separating at least one first group (4a) of cooling channels (4) and one second group (4b) of cooling channels (4), said at least one fluid communication groove (5) and said at least one spacing portion (8a, 8b) being superimposed with each other,
- at least one reagent dispensing duct (7), formed from the outer surface (Se) of the reactor body (2) to said at least one fluid communication groove (5), through said at least one spacing portion (8a, 8b), and extending substantially perpendicular to the reagent channels (3) and cooling channels (4), said at least one reagent dispensing duct (7) opening into the outer surface (Se) of the reactor body (2) for at least partially supplying the heat exchanger reactor (1) with reagents and on at least said at least one fluid communication groove (5) for at least partially dispensing agents,
and **in that** it includes at least one first reagent injection point (I1) formed at the inlet (E) of the reagent channels (3) and at least one second reagent injection point (I2, I3) formed at said at least one reagent dispensing duct (7).

2. The heat exchanger reactor according to claim 1, **characterised in that** the largest longitudinal dimension (L₈ₐ, L_{8b}) of said at least one spacing portion (8a, 8b) is greater than or equal to the largest longitudinal dimension (L₅) of said at least one fluid communication groove (5).

3. The heat exchanger reactor according to any of the previous claims, **characterised in that** said at least one spacing portion (8a, 8b) extends from side to side of the heat exchanger reactor (1).

4. The heat exchanger reactor according to any of the previous claims, **characterised in that** it includes a reagent supplying device (23) for said at least one reagent dispensing duct (7), in particular as a manifold (23).

5. The heat exchanger reactor according to any of the previous claims, **characterised in that** it includes at least:
- a first row (R1) of at least two reagent channels (3) and a second row (R2) of at least two reagent channels (3), superimposed with each other so as to form at least two columns (C1, C2) of at least two reagent channels (3),
- a first fluid communication groove (5) and a second fluid communication groove (5), remote from each other, formed on an isthmus (6) separating two adjacent reagent channels (3) for each row (R1, R2) of at least two reagent channels (3),
- a first group (4a), a second group (4b) and a third group (4c) of cooling channels (4), the first (4a) and second (4b) groups being longitudinally separated by a first spacing portion (8a) and the second (4b) and third (4c) groups being longitudinally separated by a second spacing portion (8b), the first fluid communication groove (5) and the first spacing portion (8a) being superimposed with each other, and the second fluid communication groove (5) and the second spacing portion (8b) being superimposed with each other,
- a first reagent dispensing duct (7), formed from the outer surface (Se) of the reactor body (2) to the first fluid communication groove (5) of each row (R1, R2) of at least two reagent channels (3), through the first spacing portion (8a), and extending substantially perpendicular to the reagent channels (3) and cooling channels (4), and a second reagent dispensing duct (7), formed from the outer surface (Se) of the reactor body (2) to the second fluid communication groove (5) of each row (R1, R2) of at least two reagent channels (3), through the second spacing portion (8b), and extending substantially perpendicular to the reagent channels (3) and cooling channels (4).

6. The heat exchanger reactor according to any of the previous claims, **characterised in that** said at least one reagent dispensing duct (7) includes at least one reagent flow rate distribution element, especially a porous element, for example a sintered element.

7. A method for manufacturing a plate exchanger reactor (1) of claim 1, for implementing endothermic or exothermic catalytic reactions and comprising a reactor body (2) formed by stacking a plurality of plates (10, 11, 12, 13), **characterised in that** it includes the following steps:
(i) manufacturing at least one reagent channel plate (10) comprising at least two reagent channels (3) for receiving at least one catalyst, said at least one reagent channel plate (10) comprising at least one fluid communication groove (5), formed on an isthmus (6) separating two adjacent reagent channels (3), for fluidly communicating both adjacent reagent channels (3),
(ii) manufacturing at least one cooling channel plate (11) comprising a plurality of cooling channels (4) for cooling the reagent channels (3), said plurality of cooling channels (4) comprising at least one first group (4a) of cooling channels (4) and a second group (4b) of cooling channels (4) longitudinally separated by at least one spacing portion (8a, 8b), said at least one fluid communication groove (5) and said at least one spacing portion (8a, 8b) for being superimposed with each other,
(ix) forming, in particular through drilling, at least one reagent dispensing duct (7) from the outer surface (Se) of the reactor body (2) to said at least one fluid communication groove (5), through said at least one spacing portion (8a, 8b), and extending substantially perpendicular to the reagent channels (3) and cooling channels (4), said at least one reagent dispensing duct (7) opening into the outer surface (Se) of the reactor body (2) for at least partially supplying the heat exchanger reactor (1) with reagents and on said at least one fluid communication groove (5) for at least partially dispensing reagents.

8. The method according to claim 7, **characterised in that** it includes the following steps of:
(iii) manufacturing at least one closing plate (13) for at least partially forming the outer surface (Se) of the reactor body (2).

9. The method according to claim 8, **characterised in that** it includes the following step of:
(iv) successively stacking: a first closing plate (13); a first cooling channel plate (11); at least one assembly formed by the stacking of a reagent channel plate (10) and a cooling channel plate (11); a second closing plate (13).

10. The method according to claim 8, **characterised in that** it includes the following successive steps of:
(v) preliminarily assembling the stacking of plates (10, 11, 12, 13) in a diffusion welding enclosure and performing a diffusion welding cycle or by uniaxial hot isostatic pressing (HIP) or by TIG welding;
(vi) preliminarily machining the stacking of plates (10, 11, 12, 13) to expose the reagent channels (3) and cooling channels (4) to the external atmosphere.

11. The method according to claim 10, **characterised in that** it includes the following successive steps of:
(vii) finally assembling the stacking of plates (10, 11, 12, 13) by placing it into a diffusion welding enclosure and performing a diffusion welding cycle or a uniaxial hot isostatic pressing (HIP) or a TIG welding;
(viii) finally machining the heat exchanger reactor (1) obtained at the end of step (vii) at least comprising implementing step (ix).

12. The method according to claim 11, **characterised in that** it includes the following step of:
(x) placing in said at least one reagent dispensing duct (7) at least one reagent flow rate distribution element, in particular a porous element, for example a sintered element.
